Europäisches Patentamt

European Patent Office

Office européen des brevets

(11) Veröffentlichungsnummer: **0 245 616 B1**

## (12) EUROPÄISCHE PATENTSCHRIFT

(45) Veröffentlichungstag der Patentschrift: **29.01.92**

(21) Anmeldenummer: **87103908.7**

(22) Anmeldetag: **17.03.87**

(51) Int. Cl.5: **G01D 5/244**, H03M 9/00, H04L 25/45

(54) **Einrichtung zur seriellen Übertragung von digitalen Messwerten wenigstens eines Messwertwandlers.**

(30) Priorität: **15.04.86 DE 3612609**

(43) Veröffentlichungstag der Anmeldung:
**19.11.87 Patentblatt 87/47**

(45) Bekanntmachung des Hinweises auf die
Patenterteilung:
**29.01.92 Patentblatt 92/05**

(84) Benannte Vertragsstaaten:
**AT CH DE ES FR GB IT LI NL SE**

(56) Entgegenhaltungen:
**EP-A- 0 125 002**
**EP-A- 0 171 579**
**US-A- 4 409 587**

**ELEKTRO, Band 10, Nr. 7/8, Juli/August 1984,**
**Seiten 722-723, Canterbury, Kent, GB;**
**"Parallel/serial converter"**

(73) Patentinhaber: **Dr. Johannes Heidenhain GmbH**
**Dr.-Johannes-Heidenhain-Strasse 5 Postfach 1260**
**W-8225 Traunreut(DE)**

(72) Erfinder: **Baumgartner, Alfons**
**Mietenkamer Strasse 112**
**W-8217 Grassau(DE)**
Erfinder: **Strasser, Erich, Dipl.-Ing.(FH)**
**Friedensstrasse 5**
**W-8221 Tacherting(DE)**

EP 0 245 616 B1

**Beschreibung**

Die Erfindung betrifft eine Einrichtung zur seriellen Übertragung von digitalen Meßwerten wenigstens eines Meßwertwandlers gemäß dem Oberbegriffs des Anspruchs 1.

Derartige Meßwertwandler in Form von absoluten Längen- oder Winkelmeßeinrichtungen werden insbesondere bei Bearbeitungsmaschinen zur Messung der Relativlage eines Werkzeugs bezüglich eines zu bearbeitenden Werkstücks sowie bei Koordinatenmeßmaschinen zur Ermittlung von Lage und/oder Abmessungen von Prüfobjekten eingesetzt.

Aus der DE-A-34 45 617 ist eine Einrichtung zur seriellen Übertragung von digitalen Meßwerten wenigstens eines Meßwertwandlers, insbesondere einer absoluten Längen- oder Winkelmeßeinrichtung, an eine Auswerteeinrichtung bekannt. Die Binärwerte der digitalen Meßwerte des Meßwertwandlers liegen an den Parallel-Eingängen eines Parallel-Seriell-Schieberegisters an, dessen Seriell-Ausgang mit der Auswerteeinrichtung verbunden ist. Von einem Taktgeber der Auswerteeinrichtung werden Taktsignalfolgen zur parallelen Einspeicherung der Binärwerte der digitalen Meßwerte des Meßwertwandlers und zur seriellen Übertragung dieser Binärwerte jedes Meßwertes an die Auswerteeinrichtung einerseits dem Takteingang des Parallel-Seriell-Schieberegisters und zum anderen einer Zeitstufe in Form eines Monoflops zugeführt; das invertierte Ausgangssignal der Zeitstufe beaufschlagt den Parallel-Seriell-Umschalteingang des Parallel-Seriell-Schieberegisters. Die erste abfallende Flanke jeder Taktsignalfolge erzeugt das invertierte Ausgangssignal der Zeitstufe, das das Einspeichern der an den Paralleleingängen des Parallel-Seriell-Schieberegisters jeweils anliegenden Binärwerte jedes Meßwertes und das Umschalten des Parallel-Seriell-Schieberegisters von Parallelbetrieb auf Seriellbetrieb bewirkt.

Während der seriellen Übertragung der einzelnen Binärwerte des jeweils im Parallel-Seriell-Schieberegister gespeicherten Meßwertes ist es jedoch erforderlich, daß die Zeitstufe in ihrem instabilen Zustand verbleibt; dieses Verbleiben der Zeitstufe im instabilen Zustand wird durch die interne Zeitkonstante der Zeitstufe bewirkt. Die internen Zeitkonstanten besitzen jedoch bei handelsüblichen Zeitstufen gewisse Toleranzen und unterliegen zudem Änderungen infolge von Alterungserscheinungen der Zeitstufen im Laufe ihrer Lebensdauer. Derartige Toleranzen und Änderungen der Zeitkonstanten der Zeitstufen können aber fehlerhafte Übertragungen der Binärwerte der einzelnen Meßwerte und damit fehlerhafte Meßergebnisse zu Folge haben.

Der Erfindung liegt die Aufgabe zugrunde, bei einer Einrichtung zur seriellen Übertragung von digitalen Meßwerten wenigstens eines Meßwertwandlers an eine Auswerteeinrichtung fehlerhafte Übertragungen der digitalen Meßwerte auszuschließen.

Diese Aufgabe wird erfindungsgemäß durch das kennzeichnende Merkmal des Anspruchs 1 gelöst.

Die mit der Erfindung erzielten Vorteile bestehen insbesondere darin, daß mit preiswerten und handelsüblichen Elementen eine fehlerfreie Übertragung von digitalen Meßwerten ermöglicht wird, so daß sich eine hohe Meßsicherheit ergibt. Durch diese hohe Meßsicherheit ergibt sich beispielsweise bei Bearbeitungsmaschinen, an denen diese Einrichtungen zum Einsatz kommen, eine verbesserte Betriebssicherheit und eine Verringerung von Ausschuß und Fehlzeiten. Ferner läßt sich die Anzahl der Elemente verringern, da das Parallel-Seriell-Schieberegister und das Seriell-Seriell-Schieberegister bzw. das Seriell-Parallel-Schieberegister der taktgesteuerten sequentiellen Schaltung in einem Baustein integrierbar sind.

Vorteilhafte Ausbildungen entnimmt man den abhängigen Ansprüchen.

Ausführungsbeispiele der Erfindung werden anhand der Zeichnung näher erläutert.

Es zeigen

Figur 1 schematisch eine Einrichtung mit einem Meßwertwandler, mit einem Parallel-Seriell-Schieberegister, mit einer Steuereinrichtung sowie mit einer ersten taktgesteuerten sequentiellen Schaltung;

Figur 2 ein erstes Signaldiagramm;

Figur 3 das Parallel-Seriell-Schieberegister nach Figur 1 mit einer zweiten taktgesteuerten sequentiellen Schaltung und

Figur 4 ein zweites Signaldiagramm.

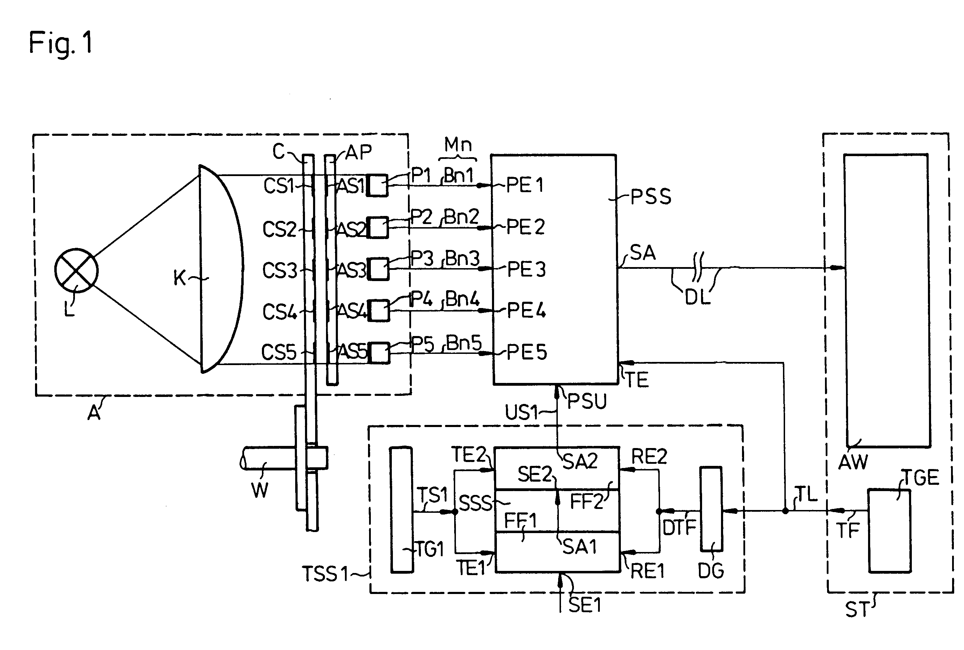

In Figur 1 ist ein Meßwertwandler in Form einer absoluten Winkelmeßeinrichtung (Winkelcodierer) schematisch dargestellt, bei dem eine um eine Achse W drehbare Codescheibe C mit einer nicht gezeigten Spindel für einen Schlitten einer Bearbeitungsmaschine verbunden ist. Die Codescheibe C weist fünf Codespuren CS1-CS5 mit Codeinformationen auf, die lichtelektrisch von einer Abtasteinheit A mit einer Lichtquelle L, einem Kondensor K, einer Abtastplatte AP sowie mit fünf Photoelementen P1-P5 abgetastet wird, die mit dem nicht gezeigten Bett der Bearbeitungsmaschine verbunden ist. Der Schlitten und das Bett der Bearbeitungsmaschine stellen die Objekte dar, deren gegenseitige relative Winkellage gemessen werden soll. Die von der Lichtquelle L ausgehenden Lichtstrahlen werden vom Kondensor K parallel gerichtet, von den fünf Codespuren CS1-CS5 der Codescheibe C und den fünf zugeordneten Abtastspuren AS1-AS5 der Abtastplatte AP moduliert und beaufschlagen die den fünf Abtastspuren AS1-AS5 zugeordneten fünf Photoelemente P1-P5, die gleichzeitig fünf Binärwerte Bn1-Bn5 erzeugen, die jeweils zusammen einen momentanen Meßwert Mn (n = 1,2,3,...) für die jeweilige gegenseitige relative Winkellage der beiden Objekte ergeben.

Die fünf Binärwerte Bn1-Bn5 jedes momentanen Meßwerts Mn werden parallel an die fünf Parallel-Eingänge PE1-PE5 eines Parallel-Seriell-Schieberegisters PSS angelegt. Der Seriell-Ausgang SA des Parallel-Seriell-Schieberegisters PSS ist über eine Datenleitung DL mit einer Auswerteeinrichtung AW in einer Steuereinrichtung ST verbunden.

Die Steuereinrichtung ST weist zusätzlich einen externen Taktgeber TGE zur Erzeugung von externen Taktsignalfolgen TF auf, der über eine Taktleitung TL einmal mit dem Takteingang TE des Parallel-Seriell-Schieberegisters PSS und zum anderen über ein Differenzierglied DG zur Erzeugung von differenzierten externen Taktsignalfolgen DTF mit den beiden Rücksetzeingängen RE1, RE2 eines Seriell-Seriell-Schieberregisters SSS verbunden ist.

Das Seriell-Seriell-Schieberegister SSS weist eine erste bistabile Kippstufe FF1 mit dem ersten Rücksetzeingang RE1, mit einem ersten Takteingang TE1, mit einem ersten Seriell-Eingang SE1 und mit einem ersten Seriell-Ausgang SA1 sowie eine zweite bistabile Kippstufe FF2 mit dem zweiten Rücksetzeingang RE2, mit einem zweiten Takteingang TE2, mit einem zweiten Seriell-Eingang SE2 und mit einem zweiten Seriell-Ausgang SA2 auf, der an einen Parallel-Seriell-Umschalteingang PSU des Parallel-Seriell-Schieberegisters PSS angeschaltet ist. Die beiden Takteingänge TE1, TE2 der beiden bistabilen Kippstufen FF1,FF2 werden von einem kontinuierlichen ersten internen Taktsignal TS1 eines ersten internen Taktgenerators TG1 beaufschlagt; der erste interne Taktgenerator TG1 und das Seriell-Seriell-Schieberegister SSS mit dem Differenzierglied DG bilden zusammen eine erste taktgesteuerte sequentielle Schaltung TSS1. Der erste Seriell-Ausgang SA1 der ersten bistabilen Kippstufe FF1 ist mit dem zweiten Seriell-Eingang SE2 der zweiten bistabilen Kippstufe FF2 verbunden. Der Parallel-Seriell-Umschalteingang PSU des Parallel-Seriell-Schieberegisters PSS wird zum Umschalten von Parallelbetrieb auf Seriellbetrieb von einem ersten Umschaltsignal US1 am zweiten Seriell-Ausgang SA2 der zweiten bistabilen Kippstufe FF2 des Seriell-Seriell-Schieberegisters SSS angesteuert.

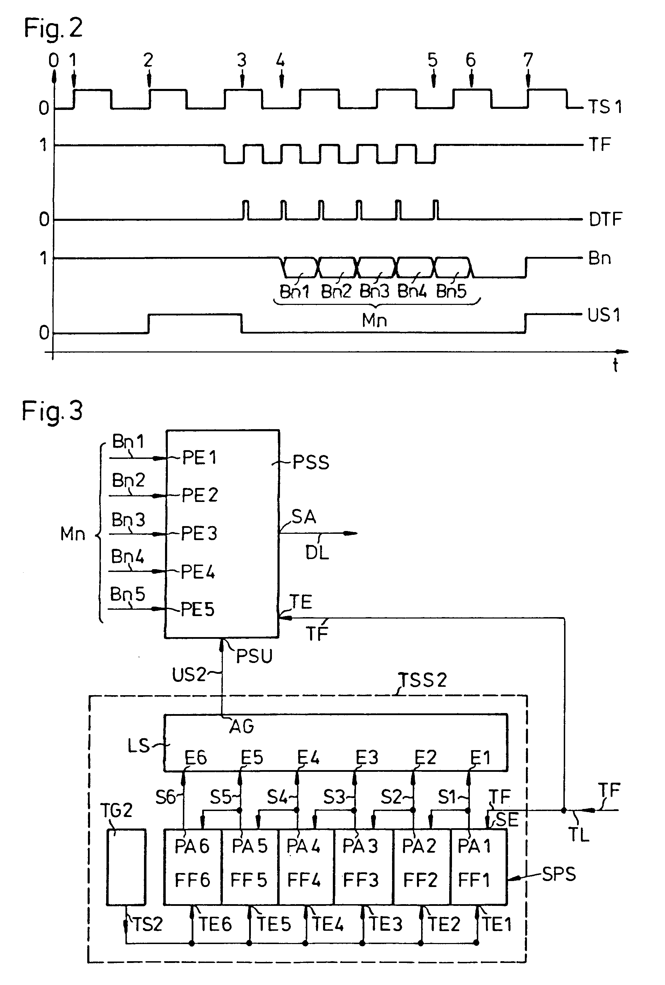

Im ersten Signaldiagramm der Figur 2 sind das erste interne Taktsignal TS1 des ersten internen Taktgebers TG1, eine der externen Taktsignalfolgen TF des externen Taktgenerators TGE, die differenzierte externe Taktsignalfolge DTF des Differenziergliedes DG, die fünf Binärwerte Bn1-Bn5 eines momentanen Meßwertes Mn der Abtasteinheit A sowie das erste Umschaltsignal US1 der ersten taktgesteuerten sequentiellen Schaltung TSS1 in Abhängigkeit von der Zeit t dargestellt. Die Frequenz der Taktsignale der externen Taktsignalfolgen TF muß stets größer als die Frequenz des ersten internen Taktsignals TS1 sein; in Figur 2 ist die Frequenz der Taktsignale der externen Taktsignalfolge TF doppelt so groß wie die Frequenz des ersten internen Taktsignals TS1. Die Taktsignale der externen Taktsignalfolgen TF sowie das erste interne Taktsignal TS1 bestehen vorzugsweise aus Rechtecksignalen.

Der zeitliche Ablauf der seriellen Übertragung der einzelnen momentanen digitalen Meßwerte Mn wird anhand der Figur 2 näher erläutert.

Von der Abtasteinheit A gelangen die einzelnen momentanen Meßwerte Mn kontinuierlich nacheinander an das Parallel-Seriell-Schieberegister PSS, wobei die Binärwerte Bn1-Bn5 der Meßwerte Mn jeweils parallel an den Parallel-Eingängen PE1-PE5 des Parallel-Seriell-Schieberegisters PSS anliegen.

Nach Figur 1 liegen die fünf Binärwerte Bn1-Bn5 des momentanen Meßwerts Mn an den fünf Parallel-Eingängen PE1-PE5 des Parallel-Seriell-Schieberegisters PSS an. Zum Zeitpunkt O gemäß Figur 2 liefert der erste interne Taktgeber TG1 das kontinuierliche erste interne Taktsignal TS1, während vom externen Taktgeber TGE keine externe Taktsignalfolge TF vorliegt. Das am Parallel-Seriell-Umschalteingang PSU des Parallel-Seriell-SchieberegistersPSS anliegende erste Umschaltsignal US1 der ersten taktgesteuerten sequentiellen Schaltung TSS1 möge zum Zeitpunkt 0 den Signalzustand Null besitzen, so daß das Parallel-Seriell-Schieberegister PSS auf Seriellbetrieb geschaltet ist; dieser Zeitpunkt 0 liegt beim Einschalten der Winkelmeßeinrichtung vor.

Die erste ansteigende Flanke des ersten internen Taktsignals TS1 schiebt zum Zeitpunkt 1 einen am ersten Seriell-Eingang SE1 der ersten bistabilen Kippstufe FF1 anliegenden Signalzustand Eins zu derem ersten Seriell-Ausgang SA1 und damit zu dem zweiten Seriell-Eingang SE2 der zweiten bistabilen Kippstufe FF2 des Seriell-Seriell-Schieberegisters SSS. Die zweite ansteigende Flanke des ersten internen Taktsignals TS1 schiebt zum Zeitpunkt 2 den am zweiten Seriell-Eingang SE2 der zweiten bistabilen Kippstufe FF2 anliegenden Signalzustand Eins zu derem zweiten Seriell-Ausgang SA2, so daß nach zwei ansteigenden Flanken des ersten internen Taktsignals TS1 am Parallel-Seriell-Umschalteingang PSU des Parallel-Seriell-Schieberegisters PSS das erste Umschaltsignal US1 mit dem Signalzustand Eins anliegt und das Parallel-Seriell-Schieberegister PSS auf Parallelbetrieb umgeschaltet wird.

Dieser Zustand bleibt bis zum Eintreffen der externen Taktsignalfolge TF des externen Taktgenerators TGE erhalten. Die erste ansteigende Flanke der externen Taktsignalfolge TF und damit der differenzierten externen Taktsignalfolge DTF beaufschlagt zum Zeitpunkt 3 die beiden Rücksetzeingänge RE1, RE2 der beiden bistabilen Kippstufen FF1, FF2, so daß an den beiden Seriell-Ausgängen SA1, SA2 der beiden bistabilen Kippstufen FF1, FF2 jeweils die Signalzustände Null auftreten; das somit am zweiten Seriell-Ausgang SA2 der zweiten bistabilen Kippstufe FF2 anstehende erste Umschaltsignal US1 mit dem Signalzustand Null schaltet das Parallel-Seriell-Schieberegister PSS vom Parallelbetrieb auf den Seriellbetrieb um; bei diesem Umschalten werden die an den Parallel-Eingängen PE1-PE5 des Parallel-Seriell-Schieberegisters PSS anliegenden Binärwerte Bn1-Bn5 des Meßwerts Mn in das Parallel-Seriell-Schieberegister PSS eingespeichert.

Die zweite ansteigende Flanke der externen Taktsignalfolge TF bewirkt zum Zeitpunkt 4 die Verschiebung des ersten Binärwertes Bn1 des momentanen Meßwertes Mn an den Seriell-Ausgang SA des Parallel-Seriell-Schieberegisters PSS und die Übertragung des ersten Binärwertes Bn1 an die Auswerteeinrichtung AW der Steuereinrichtung ST über die Datenleitung DL. Mit der dritten, vierten, fünften und sechsten ansteigenden Flanke der externen Taktsignalfolge TF werden jeweils der zweite, dritte, vierte und fünfte Binärwert Bn2,Bn3,Bn4,Bn5 des momentanen Meßwertes Mn nacheinander an den Seriell-Ausgang SA des Parallel-Seriell-Schieberegisters PSS verschoben und über die Datenleitung DL an die Auswerteeinrichtung AW übertragen.

Nach der Übertragung des fünften Binärwertes Bn5 des Meßwertes Mn liegt zum Zeitpunkt 6 am Seriell-Ausgang SA des Parallel-Seriell-Schieberegisters PSS und auf der Datenleitung DL der Signalzustand Null vor, der der Auswerteeinrichtung AW die Nichtbereitschaft für eine weitere Übertragung anzeigt.

Während der Übertragung der fünf Binärwerte Bn1-Bn5 des momentanen Meßwertes Mn durch die zugehörigen ansteigenden Flanken der externen Taktsignalfolge TF wird zwar durch jede ansteigende Flanke des ersten internen Taktsignals TS1 der Signalzustand Eins am ersten Seriell-Eingang SE1 der ersten bistabilen Kippstufe FF1 zu derem ersten Seriell-Ausgang SA1 und damit zum zweiten Seriell-Eingang SE2 der zweiten bistabilen Kippstufe FF2 verschoben, jedoch vor dem Eintreffen der nächsten ansteigenden Flanke des ersten internen Taktsignals TS1 zum Verschieben des am zweiten Seriell-Eingang SE2 der zweiten bistabilen Kippstufe FF2 anliegenden Signalzustandes Eins zu derem zweiten Seriell-Ausgang SA2 wird der Signalzustand Eins am ersten Seriell-Ausgang SA1 der ersten bistabilen Kippstufe FF1 und am zweiten Seriell-Eingang SE2 der zweiten bistabilen Kippstufe FF2 durch zwei ansteigende Flanken der externen Taktsignalfolge TF und damit der differenzierten externen Taktsignalfolge DTF wieder auf den Signalzustand Null zurückgesetzt. Erst nach der sechsten ansteigenden Flanke der externen Taktsignalfolge TF zum Zeitpunkt 5, die das Verschieben des fünften Binärwertes Bn5 und das Rücksetzen der beiden bistabilen Kippstufen FF1, FF2 durch die zugehörige ansteigende Flanke der differenzierten externen Taktsignalfolge DTF bewirkt sowie die externe Taktsignalfolge TF beendet, wird durch zwei aufeinanderfolgende ansteigende Flanken des ersten internen Taktsignals TS 1 in der anfangs beschriebenen Weise der Signalzustand Null des ersten Umschaltsignals US1 auf den Signalzustand Eins zum Zeitpunkt 7 geändert und das Parallel-Seriell-Schieberegister PSS vom Seriellbetrieb auf den Parallelbetrieb umgeschaltet. Gleichzeitig erscheint am Seriell-Ausgang SA des Parallel-Seriell-Schieberegisters PSS und damit auch auf der Datenleitung DL der Signalzustand Eins, um der Auswerteeinrichtung AW die Bereitschaft zur Übertragung des nächsten Meßwertes Mn + 1 anzuzeigen; diese Übertragung des nächsten Meßwertes Mn + 1 erfolgt mittels der nächsten externen Taktsignalfolge TF des externen Taktgebers TGE auf die gleiche oben beschriebene Weise.

Das Seriell-Seriell-Schieberegister SSS der ersten taktgesteuerten sequentiellen Schaltung TSS1 kann auch mehr als zwei bistabile Kippstufen FF1,FF2 aufweisen; zudem kann das Seriell-Seriell-Schieberegister SSS auch durch einen Zähler mit einer entsprechenden Anzahl von Zählstufen ersetzt werden.

In Figur 3 ist das Parallel-Seriell-Schieberegister PSS nach Figur 1 mit den an den Parallel-Eingängen PE1-PE5 anliegenden fünf Binärwerten Bn1-Bn5 des momentanen Meßwertes Mn und mit der am Seriell-Ausgang SA angeschlossenen Datenleitung DL dargestellt; der Parallel-Seriell-Umschalteingang PSU des Parallel-Seriell-Schieberegisters PSS wird von einem zweiten Umschaltsignal US2 einer zweiten taktgesteuerten sequentiellen Schaltung TSS2 angesteuert. Die drehbare Codescheibe C, die Abtasteinheit A sowie die Steuereinrichtung ST mit der Auswerteeinrichtung AW und dem externen Taktgeber TGE mitsamt dem nachgeschalteten Differenzierglied DG sind mit der Figur 1 identisch und daher nicht dargestellt. Dem Takteingang TE des Parallel-Seriell-Schieberegisters PSS werden auf der Taktleitung TL die externen Taktsignalfolgen TF zugeführt.

Die zweite taktgesteuerte sequentielle Schaltung TSS2 weist ein Seriell-Parallel-Schieberegister SPS, eine logische Schaltung LS in Form eines NOR-Gatters und einen zweiten internen Taktgeber TG2 auf. Das Seriell-Parallel-Schieberegister SPS besteht aus sechs bistabilen Kippstufen FF1-FF6 mit sechs Takteingängen TE1-TE6, mit einem Seriell-Eingang SE und mit sechs Parallel-Ausgängen PA1-PA6. Der Seriell-Eingang SE des Seriell-Parallel-Schieberegisters SPS ist der Eingang der ersten bistabilen Kippstufe FF1. Die Parallel-Ausgänge PA1-PA5 der ersten fünf bistabilen Kippstufen FF1-FF5 sind jeweils mit den Eingängen der nächstfolgenden bistabilen Kippstufen FF2-FF6 verbunden. Der zweite interne Taktgeber TG2 beaufschlagt mit einem kontinuierlichen zweiten internen Taktsignal TS2 gemeinsam die sechs Takteingänge TE1-TE6 der sechs bistabilen Kippstufen FF1-FF6; die externen Taktsignalfolgen TF des externen Taktgebers TGE beaufschlagen zusätzlich den Seriell-Eingang SE des Seriell-Parallel-Schieberegisters SPS. Die sechs Parallel-Ausgänge PA1-PA6 des Seriell-Parallel-Schieberegisters SPS sind mit sechs Eingängen E1-E6 der logischen Schaltung LS verbunden, an derem Ausgang AG das zweite Umschaltsignal US2 zur Beaufschlagung des Parallel-Seriell-Umschalteingangs PSU des Parallel-Seriell-Schieberegisters PSS ansteht.

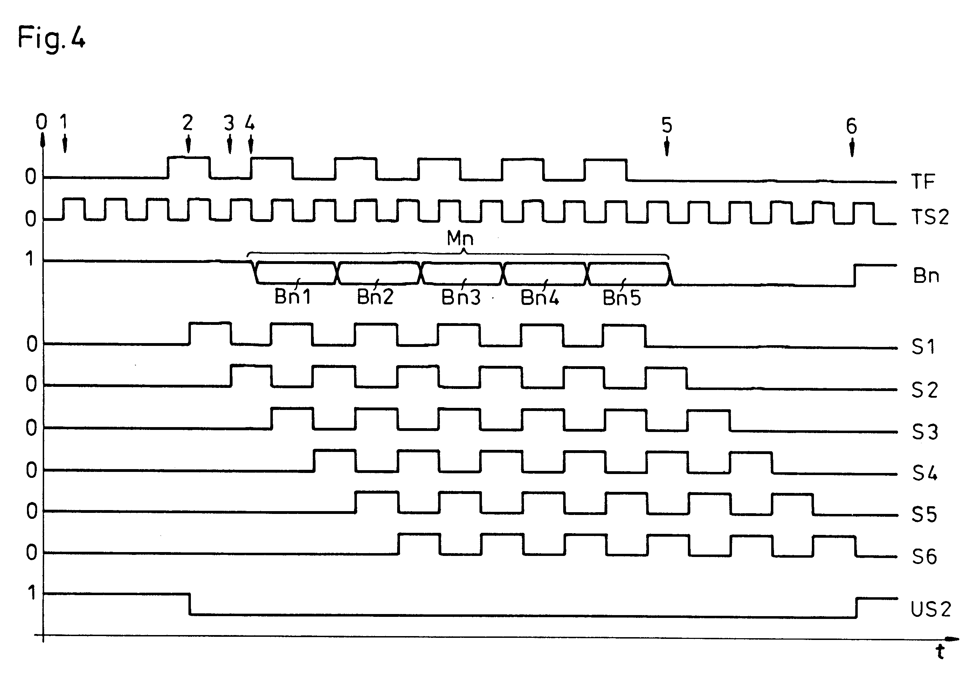

Im zweiten Signaldiagramm der Figur 4 sind eine der externen Taktsignalfolgen TF des externen Taktgebers TGE, das zweite interne Taktsignal TS2 des zweiten internen Taktgebers TG2, die fünf Binärwerte Bn1-Bn5 eines momentanen Meßwertes Mn der Abtasteinheit A, die sechs Signale S1-S6 an den Parallel-Ausgängen PA1-PA6 des Seriell-Parallel-Schieberegisters SPS sowie das zweite Umschaltsignal US2 am Ausgang AG der logischen Schaltung LS der zweiten taktgesteuerten sequentiellen Schaltung TSS2 in Abhängigkeit von der Zeit t dargestellt. Die Frequenz des zweiten internen Taktsignals TS2 muß stets größer als die Frequenz der Taktsignale der externen Taktsignalfolge TF sein; in Figur 4 ist die Frequenz des zweiten internen Taktsignals TS2 etwa doppelt so groß wie die Frequenz der Taktsignale der externen Taktsignalfolge TF. Die Taktsignale der externen Taktsignalfolge TF sowie das zweite interne Taktsignal TS2 bestehen vorzugsweise aus Rechtecksignalen.

Der zeitliche Ablauf der seriellen Übertragung der einzelnen momentanen digitalen Meßwerte Mn wird anhand der Figur 4 näher erläutert.

Von der Abtasteinheit A gelangen die einzelnen momentanen Meßwerte Mn kontinuierlich nacheinander an das Parallel-Seriell-Schieberegister PSS, wobei die Binärwerte Bn1-Bn5 der Meßwerte Mn jeweils parallel an den Parallel-Eingängen PE1-PE5 des Parallel-Seriell-Schieberegisters PSS anliegen.

Nach Figur 3 liegen die fünf Binärwerte Bn1-Bn5 des momentanen Meßwertes Mn an den fünf Parallel-Eingängen PE1-PE5 des Parallel-Seriell-Schieberegisters PSS an. Zum Zeitpunkt 0 gemäß Figur 4 liefert der zweite interne Taktgeber TG2 das kontinuierliche zweite Taktsignal TS2, während vom externen Taktgeber TGE keine externe Taktsignalfolge TF vorliegt. Die erste ansteigende Flanke des zweiten internen Taktsignals TS2 zum Zeitpunkt 1 schiebt den am Seriell-Eingang SE der ersten bistabilen Kippstufe FF1 der zweiten taktgesteuerten sequentiellen Schaltung TSS2 anliegenden Signalzustand Null der externen Taktsignalfolge TF an ihren ersten Parallel-Ausgang PA1 und die Signalzustände Null an den Eingängen der übrigen fünf bistabilen Kippstufen FF2-FF6 ebenfalls zu ihren jeweiligen Parallel-Ausgängen PA2-PA6, so daß die Signale S1-S6 an diesen Parallel-Ausgängen PA1-PA6 den gleichen Signalzustand Null innehaben und die Eingänge E1-E6 der nachgeschalteten logischen Schaltung LS in Form des NOR-Gatters beaufschlagen; am Ausgang AG der logischen Schaltung LS erscheint somit das zweite Umschaltsignal US2 mit dem Signalzustand Eins, das den Parallel-Seriell-Umschalteingang PSU des Parallel-Seriell-Schieberegisters PSS beaufschlagt, so daß das Parallel-Seriell-Schieberegister PSS auf Parallelbetrieb geschaltet ist.

Dieser Zustand bleibt bei den nachfolgenden ansteigenden Flanken des zweiten internen Taktsignals TS2 bis zum Eintreffen der externen Taktsignalfolge TF erhalten. Die erste ansteigende Flanke des zweiten internen Taktsignals TS2 nach dem Eintreffen der ersten ansteigenden Flanke der externen Taktsignalfolge TF schiebt zum Zeitpunkt 2 den am Seriell-Eingang SE der ersten bistabilen Kippstufe FF1 anliegenden Signalzustand Eins der externen Taktsignalfolge TF an ihren ersten Parallel-Ausgang PA1, während die Parallel-Ausgänge PA2-PA6 der fünf weiteren bistabilen Kippstufen FF2-FF6 den Signalzustand Null beibehalten. Da nun das Signal S1 der ersten bistabilen Kippstufe FF1 den Signalzustand Eins und die Signale S2-S6 der fünf übrigen bistabilen Kippstufen FF2-FF6 den Signalzustand Null aufweisen, erscheint am Ausgang AG der logischen Schaltung LS in Form des NOR-Gatters das zweite Umschaltsignal US2 mit dem Signalzustand Null, so daß das Parallel-Seriell-Schieberegister PSS vom Parallelbetrieb auf den Seriellbetrieb umgeschaltet wird. Bei diesem Umschalten werden die an den Parallel-Eingängen PE1-PE5 des Parallel-Seriell-Schieberegisters PSS anliegenden Binärwerte Bn1-Bn5 des vorliegenden momentanen Meßwertes Mn in das Parallel-Seriell-Schieberegister PSS eingespeichert.

Die zweite ansteigende Flanke der externen Taktsignalfolge TF bewirkt zum Zeitpunkt 4 die Verschiebung des ersten Binärwertes Bn1 des momentanen Meßwertes Mn an den Seriell-Ausgang SA des Parallel-Seriell-Schieberegisters PSS und die Übertragung des ersten Binärwertes Bn1 an die Auswerteeinrichtung AW der Steuereinrichtung ST über die Datenleitung DL. Mit der dritten, vierten, fünften und sechsten ansteigenden Flanke der externen Taktsignalfolge TF werden jeweils der zweite, dritte, vierte und fünfte Binärwert Bn2,Bn3, Bn4,Bn5 des momentanen Meßwertes Mn nacheinander an den Seriell-Ausgang SA des Parallel-Seriell-Schieberegisters PSS verschoben und über die Datenleitung DL an die Auswerteeinrichtung AW übertragen.

Nach der Übertragung des fünften Binärwertes Bn5 des Meßwertes Mn liegt zum Zeitpunkt 5 am Seriell-Ausgang SA des Parallel-Seriell-Schieberegisters PSS und auf der Datenleitung DL der Signalzustand Null vor, der der Auswerteeinrichtung AW die Nichtbereitschaft für eine weitere Übertragung anzeigt.

Die zweite ansteigende Flanke des zweiten internen Taktsignals TS2 schiebt zum Zeitpunkt 3 den am Seriell-Eingang SE der ersten bistabilen Kippstufe FF1 anliegenden Signalzustand Null der externen Taktsignalfolge TF an ihren ersten Parallel-Ausgang PA1 und den am Eingang der zweiten bistabilen Kippstufe FF2 anliegenden Signalzustand Eins an ihren zweiten Parallel-Ausgang PA2, während die Parallel-Ausgänge PA3-PA6 der vier restlichen bistabilen Kippstufen FF3-FF6 den Signalzustand Null beibehalten. Da nun das Signal S2 der zweiten bistabilen Kippstufe FF2 den Signalzustand Eins und die Signale S1,S3-S6 der fünf übrigen bistabilen Kippstufen FF1,FF3-FF6 den Signalzustand Null aufweisen, erscheint am Ausgang AG der logischen Schaltung LS in Form des NOR-Gatters wiederum das zweite Umschaltsignal US2 mit dem Signalzustand Null, so daß das Parallel-Seriell-Schieberegister PSS im Seriellbetrieb verbleibt. Erst zum Zeitpunkt 6 liegen bei der ansteigenden Flanke des zweiten internen Taktsignals TS2 an den Parallel-Ausgängen PA1-PA6 der sechs bistabilen Kippstufen FF1-FF6 des Seriell-Parallel-Schieberegisters SPS der Signalzustand Null an, so daß am Ausgang AG der logischen Schaltung LS das zweite Umschaltsignal US2 mit dem Signalzustand Eins erscheint und das Parallel-Seriell-Schieberegister PSS vom Seriellbetrieb auf den Parallelbetrieb umgeschaltet wird. Gleichzeitig erscheint am Seriell-Ausgang SA des Parallel-Seriell-Schieberegisters PSS und damit auch auf der Datenleitung DL der Signalzustand Eins, um der Auswerteeinrichtung AW die Bereitschaft zur Übertragung des nächsten Meßwertes Mn + 1 anzuzeigen; diese Übertragung des nächsten Meßwertes Mn + 1 erfolgt mittels der nächsten externen Taktsignalfolge TF des externen Taktgebers TGE auf die gleiche oben beschriebene Weise.

Die Anzahl der erforderlichen bistabilen Kippstufen FF des Seriell-Parallel-Schieberegisters SPS ist vom Frequenzverhältnis des zweiten internen Taktsignals TS2 zur externen Taktsignalfolge TF abhängig.

**Patentansprüche**

1. Einrichtung zur seriellen Übertragung von digitalen Meßwerten (Mn) wenigstens eines Meßwertwandlers, insbesondere einer absoluten Längenoder Winkelmeßeinrichtung, an eine Auswerteeinrichtung (AW), bei der die Binärwerte (Bn) der digitalen Meßwerte (Mn) an den Parallel-Eingängen (PE) eines Parallel-Seriell-Schieberegisters (PSS) anliegen, dessen Seriell-Ausgang (SA) mit der Auswerteeinrichtung (AW) verbunden ist, und bei der Taktsignalfolgen (TF) eines Taktgebers (TGE) einerseits dem Takteingang (TE) und andererseits dem Parallel-Seriell-Umschalteingang (PSU) des Parallel-Seriell-Schieberegisters (PSS) zuführbar sind, dadurch gekennzeichnet, daß zwischen dem Taktgeber (TGE) und dem Parallel-Seriell-Umschalteingang (PSU) des Parallel-Seriell-Schieberegisters (PSS) eine erste taktgesteuerte sequentielle Schaltung (TSS1) vorgesehen ist, die ein Seriell-Seriell-Schieberegister (SSS) mit mehreren bistabilen Kippstufen (FF1, FF2), ein Differenzierglied (DG) sowie einen internen Taktgeber (TG1) aufweist, und daß der Parallel-Seriell-Umschalteingang (PSU) des Parallel-Seriell-Schieberegisters (PSS) zum Umschalten vom Parallelbetrieb auf den Seriellbetrieb von einem Umschaltsignal (US1) am Seriell-Ausgang (SA2) der letzten bistabilen Kippstufe (FF2) des Seriell-Seriell-Schieberegisters (SSS) angesteuert wird.

2. Einrichtung zur seriellen Übertragung von digitalen Meßwerten (Mn) wenigstens eines Meßwertwandlers, insbesondere einer absoluten Längen- oder Winkelmeßeinrichtung, an eine Auswerteeinrichtung (AW), bei der die Binärwerte (Bn) der digitalen Meßwerte (Mn) an den Parallel-Eingängen (PE) eines Parallel-Seriell-Schieberegisters (PSS) anliegen, dessen Seriell-Ausgang (SA) mit der Auswerteeinrichtung (AW) verbunden ist, und bei der Taktsignalfolgen (TF) eines Taktgebers (TGE) einerseits dem Takteingang (TE) und andererseits dem Parallel-Seriell-Umschalteingang (PSU) des Parallel-Seriell-Schieberegisters (PSS) zuführbar sind, dadurch gekennzeichnet, daß zwischen dem Taktgeber (TGE) und dem Parallel-Seriell-Umschalteingang (PSU) des Parallel-Seriell-Schieberegisters (PSS) eine zweite taktgesteuerte sequentielle Schaltung (TSS2) vorgesehen ist, die ein Seriell-ParallelSchieberegister (SPS) mit mehreren bistabilen Kippstufen (FF1-FF6), eine nachgeschaltete logische Schaltung (LS) mit einer NOR-Funktion sowie einen internen Taktgeber (TG2) aufweist, und daß der Parallel-Seriell-Umschalteingang (PSU) des Parallel-Seriell-Schieberegisters (PSS) zum Umschalten vom Parallelbetrieb auf den Seriellbetrieb von einem Umschaltsignal (US2) am Ausgang (AG) der logischen Schaltung (LS) angesteuert wird, deren Eingänge (E1-E6) mit den Parallel-Ausgängen des Parallel-Seriell-Schieberegisters (PSS) verbunden sind.

3. Einrichtung nach Anspruch 1, dadurch gekennzeichnet, daß das Seriell-Seriell-Schiebergister (SSS) zwei bistabile Kippstufen (FF1, FF2) aufweist, daß der Takteingang (TE1, TE2) jeder bistabilen Kippstufe (FF1, FF2) von einem internen Taktsignal (TS1) des internen Taktgebers (TG1) und der Rücksetzeingang (RE1, RE2) jeder bistabilen Kippstufe (FF1, FF2) von den mittels des Differenziergliedes (DG) differenzierten externen Taktsignalfolgen (TF) des externen Taktgebers (TGE) beaufschlagt sind und daß der Beginn jeder Taktsignalfolge (TF) vom Signalzustand einer Datenleitung (DL) zwischen dem Parallel-Seriell-Schieberegister (PSS) und der Auswerteeinrichtung (AW) bestimmt wird.

4. Einrichtung nach Anspruch 2, dadurch gekennzeichnet, daß das Seriell-Parallel-Schieberegister (SPS) sechs bistabile Kippstufen (FF1-FF6) aufweist, daß der Takteingang (TE1-TE6) jeder bistabilen Kippstufe (FF1-FF6) von einem internen Taktsignal (TS2) des internen Taktgebers (TG2) und der Seriell-Eingang (SE) der ersten bistabilen Kippstufe (FF1) von den externen Taktsignalfolgen (TF) des externen Taktgebers (TGE) beaufschlagt sind und daß der Beginn jeder Taktsignalfolge (TF) vom Signalzustand einer Datenleitung (DL) zwischen dem Parallel-Seriell-Schieberegister (PSS) und der Auswerteeinrichtung (AW) bestimmt wird.

5. Einrichtung nach Anspruch 3, dadurch gekennzeichnet, daß das kontinuierliche interne Taktsignal (TS1) des internen Taktgebers (TG1) eine geringere Frequenz als die Taktsignale der externen Taktsignalfolgen (TF) des externen Taktgebers (TGE) aufweist.

6. Einrichtung nach Anspruch 4 dadurch gekennzeichnet, daß das kontinuierliche interne Taktsignal (TS2) des internen Taktgebers (TG2) eine höhere Frequenz als die Taktsignale der externen Taktsignalfolgen (TF) des externen Taktgebers (TGE) aufweist.

7. Einrichtung nach Anspruch 1, dadurch gekennzeichnet, daß die logische Schaltung (LS) aus einem NOR-Gatter besteht.

**Claims**

1. Apparatus for serial transmission of digital measured values (Mn) from at least one measurement transducer, especially an absolute length or angle measuring device, to an evaluating device (AW), in which the binary values (Bn)) of the digital measured values (Mn) are applied to the parallel inputs (PE) of a parallel-serial shift register (PSS), whose serial output (SA) is connected to the evaluating device (AW), and in which the clock signal train (TF) of a clock generator (TGE) can be fed on to the one hand to the clock input (TE) and on the other hand to the parallel-serial switching input (PSU) of the parallel-serial shift register (PSS), characterized in that there is provided between the clock generator (TGE) and the parallel-serial switching input (PSU) of the parallel-serial shift register (PSS) a first, clock-controlled sequential circuit (TSS1), which comprises a serial-serial shift register (SSS) with a plurality of bistable flip-flop stages (FF1, FF2), a differentiating element (DG) as well as an internal clock generator (TG1), and in that the parallel-serial switching input (PSU) of the parallel-serial shift register (PSS) is controlled for switching from parallel operation to serial operation by a switching signal (US1) at the serial output (SA2) of the last bistable flip-flop stage (FF2) of the serial-serial shift register (SSS).

2. Apparatus for serial transmission of digital measured values (Mn) from at least one measurement transducer, especially an absolute length or angle measuring device, to an evaluating device (AW), in which the binary values (Bn)) of the digital measured values (Mn) are applied to the parallel inputs (PE) of a parallel-serial shift register (PSS), whose serial output (SA) is connected to the evaluating device (AW), and in which the clock signal train (TF) of a clock generator (TGE) can be fed on to the one hand to the clock input (TE) and on the other hand to the parallel-serial switching input (PSU) of the parallel-serial shift register (PSS), characterized in that there is provided between the clock generator (TGE) and the parallel-serial switching input (PSU) of the parallel-serial shift register (PSS) a second, clock-controlled sequential circuit (TSS2), which comprises a serial-parallel shift register (SPS) with a plurality of bistable flip-flop stages (FF1-FF6), a following logical circuit (LS) with a NOR function, as well as an internal clock generator (TG2), and in that the parallel-serial switching input (PSU) of the parallel-serial shift register (PSS) is controlled for switching from parallel operation to serial operation by a switching signal (US2) at the output (AG) of the logical circuit (LS), the inputs (E1-E6) of which are connected to the parallel outputs of the parallel-serial shift register (PSS).

3. Apparatus according to claim 1, characterized in that the serial-serial shift register (SSS) has two bistable flip-flop stages (FF1, FF2), in that the clock input (TE1, TE2) of each bistable flip-flop (FF1, FF2) is responsive to an internal clock signal (TS1) of the internal clock generator (TG1) and the reset input (RE1, RE2) of each bistable flip-flop stage (FF1, FF2) is responsive to the external clock signal train (TF) of the external clock generator (TGE) differentiated by means of the differentiating element (DG), and in that the beginning of each clock signal train (TF) is determined by the signal state of a data line (DL) between the parallel-serial shift register (PSS) and the evaluating device (AW).

4. Apparatus according to claim 2, characterized in that the serial-parallel shift register (SPS) has six bistable flip-flop stages (FF1-FF6), in that the clock input (TE1-TE6) of each bistable flip-flop stage (FF1-FF6) is responsive to an internal clock signal (TG2) of the internal clock generator (TG) and the serial input (SE) of the first bistable flip-flop stage (FF1) is responsive to the external clock train (TF) of the external clock generator (TGE), and in that the beginning of each clock signal train (TF) is determined by the signal state of a data line (DL) between the parallel-serial shift register (PSS) and the evaluating device (AW).

5. Apparatus according to claim 3, characterized in that the continuous internal clock signal (TS1) of the internal clock generator (TG1) has a lower frequency than the clock signals of the external clock signal train (TF) of the external clock generator (TGE).

6. Apparatus according to claim 4, characterized in that the continuous internal clock signal (TS2) of the internal clock generator (TG2) has a higher frequency than the clock signals of the external clock signal train (TF) of the external clock generator (TGE).

7. Apparatus according to claim 1, characterized in that the logical circuit (LS) consists of a NOR gate.

## Revendications

1. Dispositif pour la transmission par séries de données de mesure numériques (Mn) d'au moins un transducteur de mesure, en particulier d'un dispositif de mesure absolue de longueurs ou d'angles, vers un dispositif d'exploitation (AW), dans lequel les valeurs binaires (Bn) des données de mesure numériques (Mn) sont appliquées aux entrées parallèle (PE) d'un registre à décalage parallèle-série (PSS), dont la sortie série (SA) est reliée au dispositif d'exploitation (AW), et dans lequel des séries de signaux d'horloge (TF) d'une horloge (TGE) sont envoyés d'une part à l'entrée d'horloge (TE) et d'autre part à l'entrée de commutation parallèle-série (PSU) du registre à décalage parallèle-série (PSS) caractérisé en ce qu'il est prévu, entre l'horloge (TGE) et l'entrée de commutation parallèle-série (PSU) du registre à décalage parallèle-série (PSS), un premier circuit séquentiel cadencé (TSS1), qui comporte un registre à décalage série-série (SSS) muni de plusieurs bascules bistables (FF1. FF2), un circuit différenciateur (DG) ainsi qu'une horloge interne (TG1), et en ce que l'entrée de commutation parallèle-série (PSU) du registre à décalage parallèle-série (PSS) est commandée par un signal de commutation (US1) présent à la sortie série (SA2) de la dernière bascule bistable (FF2) du registre à décalage série-série (SSS) pour la conutation du fonctionnement parallèle vers le fonctionnement série.

2. Dispositif pour la transmission par séries de données de mesure numériques (Mn) d'au moins un transducteur de mesure, en particulier d'un dispositif de mesure absolue de longueurs ou d'angles, vers un dispositif d'exploitation (AW), dans lequel les valeurs binaires (Bn) des données de mesure numériques (Mn) sont appliquées aux entrées parallèle (PE) d'un registre à décalage parallèle-série (PSS), dont la sortie série (SA) est reliée au dispositif d'exploitation (AW), et dans lequel des séries de signaux d'horloge (TF) d'une horloge (TGE) sont envoyés d'une part à l'entrée d'horloge (TE) et d'autre part à l'entrée de commutation parallèle-série (PSU) du registre à décalage parallèle-série (PSS) caractérisé en ce qu'il est prévu, entre l'horloge (TGE) et l'entrée de commutation parallèle-série (PSU) du registre à décalage parallèle-série (PSS), un deuxième circuit séquentiel cadencé (TSS2), qui comporte un registre à décalage série-parallèle (SPS) muni de plusieurs bascules bistables (FF1-FF6), un circuit logique (LS) avec une fonction NON-OU monté derrière celui-ci ainsi qu'une horloge interne (TG2), et en ce que l'entrée de commutation parallèle-série (PSU) du registre à décalage parallèle-série (PSS) est commandée, pour la commutation du fonctionnement parallèle vers le fonctionnement série, par un signal de commutation (US2) présent à la sortie (AG) du circuit logique (LS), dont les entrées (E1-E6) sont reliées aux sorties parallèles du registre à décalage parallèle-série (PSS).

3. Dispositif selon la revendication 1 caractérisé en ce que le registre à décalage série-série (SSS) comporte deux bascules bistables (FF1, FF2), en ce que l'entrée d'horloge (TE1, TE2) de chacune des bascules bistables (FF1, FF2) reçoit un signal d'horloge interne (TS1) de l'horloge interne (TG1) et l'entrée de remise à l'état d'origine (RE1, RE2) de chaque bascule bistable (FF1, FF2) reçoit les séries de signaux d'horloge externe (TF) de l'horloge externe (TGE) différenciées au moyen du circuit différenciateur (DG), et en ce que le début de chaque série de signaux d'horloge (TF) est déterminé par l'état de signal d'une ligne de données (DL) entre le registre à décalage parallèle-série (PSS) et le dispositif d'exploitation (AW).

4. Dispositif selon la revendication 2 caractérisé en ce que le registre à décalage série-parallèle (SPS) comporte six bascules bistables (FF1-FF6), en ce que l'entrée d'horloge (TE1-TE6) de chacune des bascules bistables (FF1-FF6) reçoit un signal d'horloge interne (TS2) de l'horloge interne (TG2) et l'entrée série (SE) de la première bascule bistable (FF1) reçoit les séries de signaux d'horloge externe (TF) de l'horloge externe (TGE) et en ce que le début de chaque série de signaux d'horloge (TF) est déterminé par l'état de signal d'une ligne de données (DL) entre le registre à décalage parallèle-série (PSS) et le dispositif d'exploitation (AW).

5. Dispositif selon la revendication 3 caractérisé en ce que le signal d'horloge interne (TS1) continu de l'horloge interne (TG1) a une fréquence inférieure à celle des signaux d'horloge de la série de signaux d'horloge externe (TF) de l'horloge externe (TGE).

6. Dispositif selon la revendication 4 caractérisé en ce que le signal d'horloge interne (TS2) continu de l'horloge interne (TG2) a une fréquence supérieure à celle des signaux d'horloge de la série de signaux d'horloge externe (TF) de l'horloge externe (TGE).

7. Dispositif selon la revendication 1 caractérisé en ce que le circuit logique (LS) est constitué d'une porte NON-OU.

Fig.1

## Fig. 2

## Fig. 3

Fig.4

EP 0 245 616 B1